# EUROPEAN PATENT SPECIFICATION

(11) **EP 2 895 404 B1**
(45) Date of publication and mention of the grant of the patent: **13.12.2017**
(21) Application number: 13773897.7
(22) Date of filing: 10.09.2013
(51) Int. Cl.: B65D 85/804, A47J 31/06

(54) **CARTRIDGE, SYSTEM AND METHOD FOR PREPARATION OF BEVERAGES**
KAPSEL, SYSTEM UND VERFAHREN ZUR ZUBEREITUNG VON GETRÄNKEN
CAPSULE, SYSTÈME ET PROCÉDÉ DE PRÉPARATION DE BOISSONS

(30) Priority: 12.09.2012 US 201213612528
(43) Date of publication of application: 22.07.2015
(73) Proprietor: Koninklijke Douwe Egberts B.V., 3532 AD Utrecht (NL)
(72) Inventor: NORTON, Mark Richard Thomas, White Plains, New York 10603 (US); HANSEN, Nick Andrew, Banbury Oxfordshire OX16 1AH (GB); YORK, Geoffrey, Pelsall West Midlands WS3 4QX (GB)
(74) Representative: Boult Wade Tennant
(86) International application number: PCT/US2013/058993
(87) International publication number: WO 2014/043102

(56) References cited:
- WO-A1-01/60712
- WO-A1-2006/111807

## Description

### Field

The present application relates to cartridges, systems and methods for preparation of beverages.

### Background

Cartridges for use in the preparation of beverages are well known. For example, it is known to provide a cartridge for use in a beverage preparation machine which, in use, is pierced by a piercing element of the beverage preparation machine to allow hot water to flow through the cartridge to brew a beverage medium such as roasted ground coffee.

One example is described in US2010/0028495. Such cartridges and beverage systems are often used in domestic and workplace settings. It is desirable by consumers for each beverage to be dispensed as quickly as possible. However, especially for beverages requiring extraction of ingredients (such as roast and ground coffee), it has been found that a better beverage is produced where the beverage ingredients are compacted and subjected to relatively high pressures. This tends to require filters having a small pore size which results in flow rates through the cartridges which are relatively slow. WO-A-01/60712 describes a beverage filter cartridge having a cup shaped outer container and a piercable lid. The beverage medium is stored in a first chamber and the cover is piercable to accommodate an injection of liquid into the first chamber. The filter element is provided between the first chamber and second chamber, the bottom wall of which is piercable to accommodate an outflow of the beverage for the second chamber. A lower section of the side wall of the outer container is configured to provide a plurality of circumferentially spaced flutes.

### Brief Summary

The present disclosure provides a cartridge, containing one or more beverage ingredients, and comprising:
a cup-shaped body having a base, a peripheral side wall and an open top;
a lid attached to the cup-shaped body to close the open top to define a container volume, the lid being pierceable to accommodate an inflow of an aqueous medium into the container volume;
a filter located within the container volume to divide the container volume into an ingredient chamber volume containing the one or more beverage ingredients and a filtrate volume;
the base being pierceable to accommodate an outflow from the filtrate volume of a beverage formed from the aqueous medium and the one or more beverage ingredients;
the peripheral side wall comprising a plurality of flutes that define a plurality of filtrate channels configured to direct beverage flow downwards towards the base of the cup-shaped body;
wherein the cup-shaped body is configured to be laterally expandable in use when aqueous medium at a temperature of at least 85°C and a pressure of at least 20 KPa is introduced into the container volume; wherein the cup-shaped body (2) is configured to be laterally expandable by distortion of the flutes (28) of the peripheral side wall(s); and
that the peripheral side wall(s) has a generally frustoconical shape prior to use and, after lateral expansion during use, has a generally barrel shape;
characterised in that the peripheral side wall(5) has a thickness of 0.15 to 0.35mm and/or the base (4) has a thickness of 0.35 to 0.55mm.

Without wanting to be bound by theory, it is believed that the lateral expansion of the cup-shaped body helps to ensure that the filtrate channels remain unblocked and hence allow a faster flow. In addition, expansion of the filter may allow a larger filter area to be obtained which can also reduce brew times.

The cup-shaped body may comprise a polymeric material.

The cup-shaped body may comprise a laminated material.

For example, the cup-shaped body may comprise a laminate of polystyrene and polyethylene. In another example, the cup-shaped body may be formed from a laminate having layers of polystyrene, ethylene vinyl alcohol (EVOH) and polyethylene.

The cup-shaped body may comprise a barrier layer. The barrier layer may form one layer of a laminate structure of the cup-shaped body. The barrier layer may be substantially impermeable to oxygen/air and/or moisture. Preferably the barrier layer acts to preserve the contents of the cartridge from potential degradation due to exposure to oxygen/air and/or moisture. An example of a suitable barrier layer is EVOH.

In one aspect the filter may be formed from a sheet material that may be formed into a cup-shape having a side wall and a base, wherein the filter may comprise a plurality of sections where the sheet material includes overlying sections when secured to the cup-shaped body and prior to introduction of the aqueous medium.

In use the filter may be configured to be laterally expandable by movement of the sheet material.

In use the filter may be configured to be longitudinally expandable by movement of the overlying sheet material.

In one aspect the cartridge may further comprise a guard element located in the filtrate volume;
wherein the guard element is separately-formed from the cup-shaped body and located within the filtrate volume to define an outlet zone, the guard element being interposed between the filter and the outlet zone;
wherein the guard element is configured to prevent encroachment of the filter into the outlet zone such that in use on full extension of a piercing element of a beverage preparation apparatus the piercing element is enabled to be placed in fluid communication with the outlet zone without the piercing element contacting the guard element or filter.

The guard element may be configured to provide physical support to at least a portion of the filter in use to limit or preclude axial expansion of the filter.

The guard element may comprise a filter support surface and at least one strut portion for spacing the filter support surface from the piercing surface of the cartridge, wherein a distal end of said strut portion may be abutted into an angle formed between the side wall and the base.

The filter may comprise an upper rim that is connected at or near a lid-end of the peripheral side wall and/or between the peripheral side wall and the lid and may further comprise a filter side wall that is unconnected to the peripheral side wall.

The present disclosure also provides a system comprising a cartridge as described above and a beverage preparation machine;
wherein the beverage preparation machine comprises:
a holder for receiving a cartridge containing one or more beverage ingredients;
an inlet piercer for piercing a lid of said cartridge for supplying an aqueous medium to the cartridge; and
an outlet piercer for piercing a base of said cartridge for allowing outflow of a beverage formed from the one or more beverage ingredients and the aqueous medium;
wherein the holder comprises a wall defining a cavity for receiving the cartridge, the cavity having an internal diameter that is larger than an external diameter of at least a substantial portion of the peripheral side wall of the cartridge such that on insertion of the cartridge into the cavity an annular expansion gap is provided between at least a substantial portion of the peripheral side wall of the cartridge and the wall of the holder.

The present disclosure also provides a method of forming a beverage from a cartridge as described above, the method using a beverage preparation machine having an inlet piercer, an outlet piercer and a holder for the cartridge, the method comprising the steps of:
inserting the cartridge into the holder, such that the cup-shaped body of the cartridge is received in a cavity bounded by a wall of the holder;
piercing the lid of the cartridge with the inlet piercer;
piercing the a base of the cartridge with the outlet piercer;
injecting an aqueous medium through the inlet piercer into the cartridge to form the beverage, the aqueous medium being injected at a temperature of at least 85°C and a pressure of at least 20 KPa; and
dispensing the beverage via the outlet piercer;
wherein due to passage of the aqueous medium through the cartridge the cup-shaped body is laterally expanded so that the peripheral side wall (5) of the cup-shaped body (2) including the flutes (28) has a generally barrel shape after lateral expansion.

Suitable materials for the filter include woven and non-woven materials, paper, and cellulose as well as plastics such as polypropylene and polyethylene. The paper or cellulose material may contain fibres of another material, for example, polypropylene or polyethylene.

The lid may be formed from polyethylene, polypropylene, polyesters including polyethylene terephthalate, polyvinyl chloride, polyvinylidene chloride, polyamides including nylon, polyurethane, paper, viscose and/or a metal foil. The lid may comprise a laminate, be metallised or formed of copolymers. In one example, the lid comprises a polyethylene-aluminium laminate.

The disclosure finds particular application where the beverage medium is an extractable/infusible product such as roasted ground coffee or leaf tea. However, the beverage medium may alternatively be a water-soluble ingredient such as instant spray-dried or freeze-dried coffee, a chocolate powder, a milk powder or a creamer powder. Milk powders may include dried skimmed milk, part-skimmed milk, and whole milk, dried milk protein concentrates, isolates, and fractions, or any combination thereof. Creamer powders may be manufactured from dairy and/or non-dairy food ingredients and typically contain emulsified fat, stabilized by protein or modified starch, dispersed in a carrier that facilitates drying, especially spray drying. The powdered product may be agglomerated. As a further alternative the beverage medium may be a mixture of extractable/infusible ingredients and water-soluble ingredients, for example a mixture of roasted ground coffee and instant freeze-dried coffee.

### Description of the Drawings

Aspects of the present disclosure will now be described, by way of example only, with reference to the accompanying drawings, in which:
Figure 1 is a cross-sectional elevation of a cartridge according to one embodiment of the present disclosure;
Figure 2 is a perspective cross-sectional view of the cartridge of Figure 1;
Figure 3 is a perspective view of a filter guard of the cartridge of Figure 1;
Figure 4 is a cross-sectional elevation of the cartridge of Figure 1 during dispensation;
Figure 5 a perspective view of another embodiment of a filter guard of the present disclosure;
Figure 6 is a cross-sectional elevation of a cartridge containing the filter guard of Figure 5 during dispensation;
Figure 7 is a cross-sectional view through the cup-shaped body of the cartridge of Figure 1;
Figure 8 is a perspective view of a filter for use in one embodiment of the cartridges of the present disclosure;
Figure 9 is a cross-sectional elevation of a cartridge according to another embodiment of the present disclosure;
Figure 10 is a perspective cross-sectional view of the cartridge of Figure 9; and
Figure 11 is a side view showing the typical shape of the cartridges of the present disclosure after dispensation.

### Detailed Description

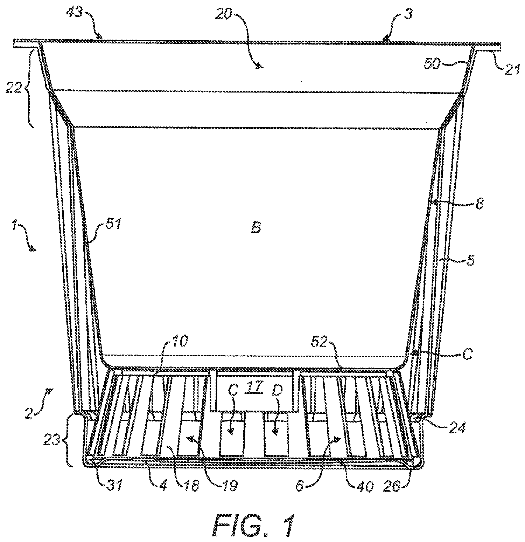

As shown in Figure 1, in a first aspect the cartridge 1 comprises a cup-shaped body 2, a lid 3, a filter guard 6 and a filter 8.

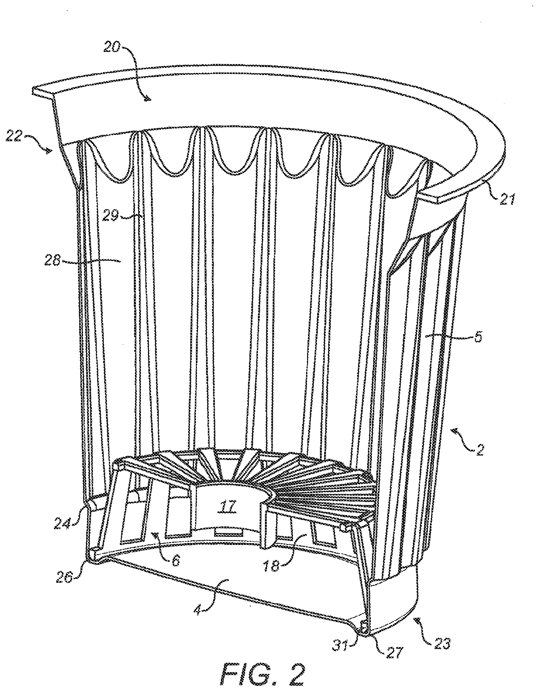

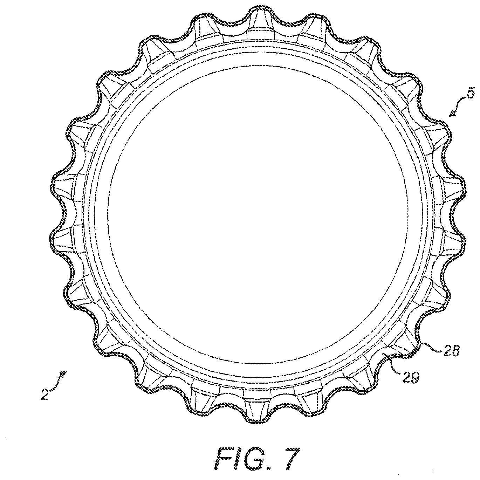

The cup-shaped body 2 of Figure 1 comprises a circular base 4 and an upwardly extending sidewall 5 that terminates at an upper rim 21 which defines an open upper end 20 of the cup-shaped body 2. As shown in Figures 2 and 7, the side wall 5 is provided on its inner face with a plurality of flutes that include protrusions 28 that project radially inwards so as to define channels 29 interposed between the protrusions 28 which run down a substantial length of the side wall 5 from the open upper end 20 towards the base 4. The side wall 5 is generally frustoconical in shape with a diameter at the open upper end 20 being larger than a diameter at the side wall 5 adjacent to the base 4. An upper region of the side wall 5 adjacent to the upper rim 21 has an inwardly tapering section 22 extending downwardly from the upper rim 21. In addition, the side wall 5 in the region of the base 4 is provided with an outwardly tapering section 23. An upper end of the outwardly tapering region 23 connects to the remainder of the side wall 5 at an out-turned shoulder 24.

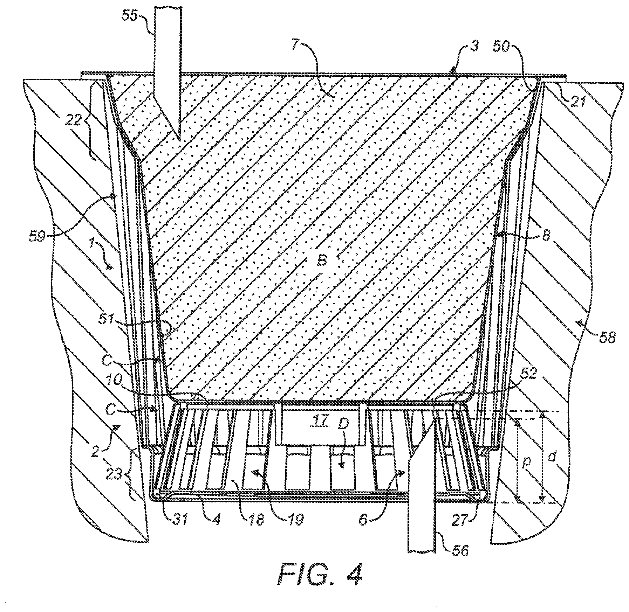

The base 4, illustrated for example in Figure 4, is generally flat and includes an annular recess 26 (illustrated in Figure 2) which is provided at its outer periphery at an corner 27 between the base 4 and the side wall 5. A flat portion 4a of the base 4 provides a lower piercing surface 40 of the cartridge 1.

The cup-shaped body 2 may be formed from a laminate having layers of polystyrene, ethylene vinyl alcohol (EVOH) and polyethylene. The EVOH layer may act as a barrier layer which may be substantially impermeable to oxygen/air and/or moisture. Preferably the barrier layer acts to preserve the contents of the cartridge from potential degradation due to exposure to oxygen/air and/or moisture.

A plurality of cup-shaped bodies 2 may be stacked together prior to assembly of the cartridges 1.

The lid 3 comprises a disc that is bonded or otherwise sealed to the upper rim 21 of the cup-shaped body 2 to close the open upper end 20 of the cartridge 1. The lid 3 defines an upper piercing surface 43 of the cartridge 1.

In one embodiment, the filter 8 has a generally cup-shaped form having an upper filter rim 50 which is bonded or otherwise sealed to the cup-shaped body 2 (e.g. to the peripheral side wall) either at or near the upper rim 21. In a non-illustrated example the filter rim 50 is bonded between the upper rim 21 of the cup-shaped body 2 and the lid 3. A filter side wall 51 may extend downwardly from the filter rim 50 and may be closed off at a lower end by a filter base 52 as illustrated. The filter 8 may be moulded from a suitable material. Alternatively, the filter 8 may be formed from sheet material that is subsequently formed into the required geometric shape.

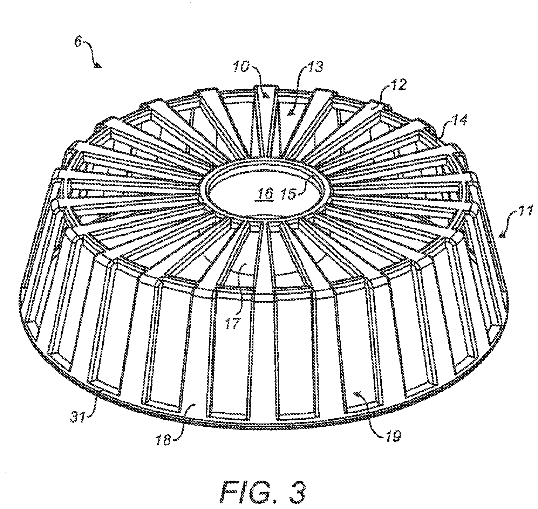

The filter guard 6 may be formed as a separate component from the cup-shaped body 2 and filter 8 and may be located at a lower end of the cup-shaped body 2 as shown in Figures 1 and 2. As most clearly shown in the embodiment of Figure 3, the filter guard 6 comprises an upper portion 9 defining an upper surface 10 and a circumferential wall 11 which, in the illustrated embodiment, extends downwardly and outwardly from the upper portion 9 to terminate at a lower rim 31. The upper portion 9 comprises an outer circumferential rim 14 and an inner circumferential rim 15 which are joined together by a plurality of radial bars 12 which define interposed upper apertures 13. The inner rim 15 defines a central aperture 16 which extends downwardly through a downwardly extending tube 17. The circumferential wall 11 may include a plurality of axially-orientated (or substantially axially-orientated) bars 18 which extend from the lower rim 31 to the outer rim 14 and which define interposed side apertures 19. The filter guard 6, illustrated in Figure 3, is generally frustoconical in shape with a diameter of the lower rim 31 being greater than the diameter of the outer rim 14.

The filter guard 6 may be rigid; meaning that it has sufficient structural strength so as not to undergo any substantial deformation during the use described below.

Advantageously, the filter guard 6 is shaped so as to be a stackable component prior to assembly of the cartridge 1. The downwardly extending tube 17 serves to ensure that adjacent filter guards 6 are spaced slightly from one another when stacked to ensure ease of separation of each filter guard 6 from the stack.

As most clearly shown in Figure 2, the lower rim 31 of the filter guard 6 may be located in the annular recess 26 of the cup-shaped body 2 with the lower rim 31 held in contact with the corner 27 between the side wall 5 and the base 4.

In an exemplary assembly technique for the cartridge 1 as shown in Figure 1, the filter guard 6 is first inserted into the open topped cup-shaped body 2 and pushed downwardly so as to engage the lower rim 31 as a push fit into contact with the corner 27 and recess 26. Insertion of the filter guard 6 in one embodiment, is accommodated by flexure of the side wall 5 to allow the relatively rigid lower rim 31 to pass the smaller diameter of the cup-shaped body 2 at the level of the out-turned shoulder 24. The side wall 5 is resilient in nature such that once inserted past the out-turned shoulder 24 the filter guard 6 is gripped and retained by the side wall 5 in contact with the corner 27 between the base 4 and the side wall 5 without the requirement for any additional bonding or connection means.

Next, the filter 8 is inserted into the cup-shaped body 2 through the open upper end 20 and bonded or otherwise connected to or near the upper rim 21, for example by heat sealing.

As shown in Figure 1, with the filter 8 in place a container volume of the cartridge 1 is divided into a beverage ingredient volume B to one side of the filter 8 and a filtrate volume C to the other side of the filter 8. The filter guard 6 is located in the filtrate volume C beneath the filter 8. The channels 29 formed between the flutes 28 form part of the filtrate volume C as they are 'downstream' of the filter 8.

A portion of beverage ingredients 7, such as roasted ground coffee, is filled through the open upper end 20 into the beverage ingredient volume B. The cartridge 1 is then closed by sealing the lid 3 to the upper rim 21 with or without sandwiching of the filter rim 50 therebetween. Two or more of the assembly steps described above may be combined into a single assembly process step.

In Figure 1, when assembled the filter base 52 is physically supported by the upper surface 10 of the filter guard 6. In one embodiment, the upper surface 10 of the filter guard 6 is configured to ensure that the material of the filter 8 does not extend into a portion of the filtrate volume C which can be considered an outlet zone D of the cartridge 1. The outlet zone D is defined as the volume between the filter guard 6 and the base 4 of the cup-shaped body 2. In one embodiment, filter guard 6 is configured to receive the piercing element such that, when the piercing element is fully extended in use, the piercing element does not move filter guard 6. In one embodiment, filter guard 6 is configured to receive the piercing element such that, when the piercing element is fully extended in use, the piercing element does not contact filter guard 6. In one embodiment, filter guard 6 defines an aperture 56a that may be configured to receive a piercing element of a beverage preparation apparatus, such that, when the piercing element is fully extended into outlet zone D in use the piercing element is placed in fluid communication with the outlet zone D.

In use, as shown in Figure 4, the cartridge 1 is inserted into a holder 58 of a beverage preparation apparatus. A peripheral wall of the holder 58 defines a cavity that is shaped and sized to receive the cartridge 1 so that an annular expansion gap 59 exists initially between the holder and the side wall 5 of the cartridge 1. The annular expansion gap 59 may be 2mm on each side of the cartridge 1.

The beverage preparation machine comprises an inlet piercing element 55 and outlet piercing element 56 which are engaged with the cartridge 1 to permit brewing and dispensation. As shown, the inlet piercing element 55 pierces the upper piercing surface 43 of the cartridge 1 to form an inlet so as to provide fluid communication to the beverage ingredient volume B. The outlet piercing element 56 pierces the lower piercing surface 40 of the base 4 to form an outlet to provide an exit flow path for beverage formed from the beverage ingredient 7 to leave the cartridge 1 and thereafter the beverage preparation apparatus can be dispensed to a receptacle such as a cup. The outlet piercing element 56 may be offset from the centre of the cartridge 1 so as not to be impeded by the downwardly-extending tube 17.

Aqueous medium, such as hot water, is injected into the cartridge 1 through the inlet piercing element 55 to contact the beverage medium 7. A beverage extract is thus formed which passes through the filter 8 into the filtrate volume C. The beverage extract passes through the filter side wall 51 into the channels 29 where it is able to run downwardly and into the outlet zone D via the side apertures 13 in the filter guard 6. Extract also passes through the filter 8 through the filter base 52 and into the outlet zone D through the upper apertures 13 and central aperture 16 of the filter guard 6.

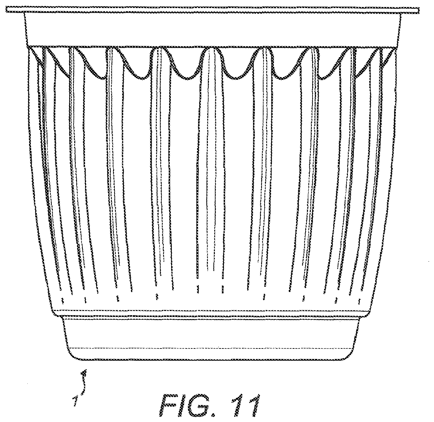

During the flow of the water through the cartridge 1 the cartridge expands laterally due to the internal pressurisation of the cartridge and the softening effect of the water which typically has a temperature of at least 85 degrees Celsius. The lateral expansion is made easier by configuring the side wall 5 to comprise the flutes 28. The lateral expansion causes the annular expansion gap 59 to be reduced or even closed entirely. As the uppermost and lowermost portions of the side wall 8 are more resilient to lateral expansion, the expansion process results in the frustoconical side wall 5 deforming into a barrel-shape as shown, for example, in Figure 11.

The lateral expansion of the cup-shaped body 2 of the cartridge 1 has advantageously been found to lead to reduced beverage formation times, which will be discussed further below.

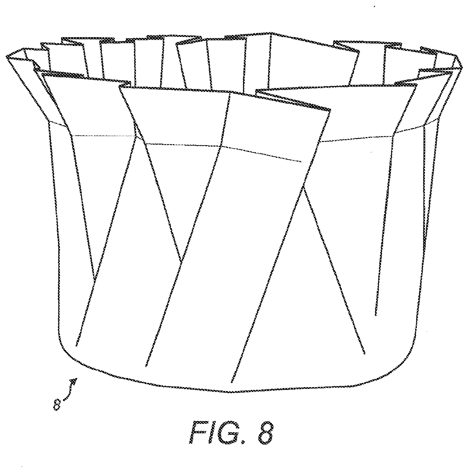

The lateral expansion of the side wall 5 of the cartridge 1 may be accompanied by lateral expansion of the filter 8. This may be particularly the case where the filter 8 is formed from a sheet material which is formed into a cup-shaped form by the overlapping of the sheet material as shown, for example, in Figure 8. In this case, lateral expansion is accommodated by the overlapping sections of the sheet material moving relative to one another, such that the filter 8 partly unfolds. The presence of the filter guard 2 limits or precludes axial expansion of the filter 8 downwards towards the base 4. It may be preferred to configure the filter 8, in terms of the size and arrangement of the overlapping sections, to ensure that the side wall 5 of the cup-shaped body 2 is able to expand laterally to a greater degree than the filter side wall. This helps to ensure that the channels 29 are always kept open.

Advantageously, as shown in Figure 4, a distance d between the base 4 of the cup-shaped body 2 and the lower face of the radial bars 12 of the filter guard 6 is greater than a penetration distance p of the outlet piercing element 56 into the cartridge 1. This ensures that during use the outlet piercing element 56 does not contact either the filter guard 6 or the filter 8. In one embodiment, aperture 56a of filter guard 6 extends from base 4 toward upper surface 10 a distance that is greater than penetration distance p.

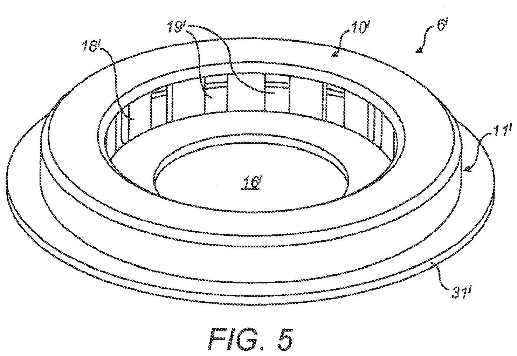

Figure 5 shows another aspect of filter guard 6' that may be incorporated into the capsule 1 in place of the filter guard 6 of Figure 3. In describing this aspect, features common to the previous aspect, in particular the configuration of the cup-shaped body 2, lid 3 and filter 8 will not be described further and reference should be made to the passages above.

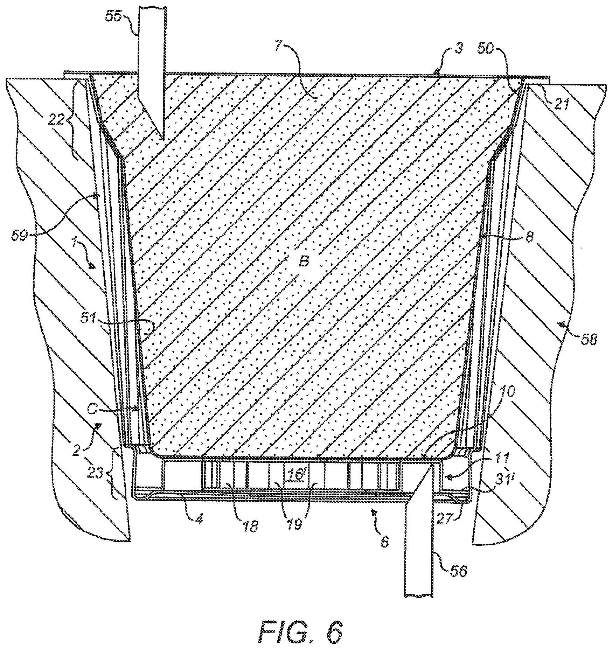

As before, the filter guard 6' may be formed as a separate component from cup-shaped body 2 and is located at a lower end of the cup-shaped body 2 as shown in Figure 6. The filter guard 6' comprises an annular portion defining an upper surface 10', an outer circumferential wall 11' and an inner circumferential wall, both walls extending downwardly from the upper portion to adjoin a lower flange element. The lower flange element defines a lower rim 31'. A central aperture 16' is provided within the upper surface 10'. The inner circumferential wall comprises a plurality of wall sections 18' which define interposed side apertures 19'.

The filter guard 6' may be rigid meaning that it has sufficient structural strength so as not to undergo any substantial deformation during the use described below.

Assembly of the cartridge 1 is as described previously except that the filter guard 6' is inserted such that the lower rim 31' is engaged in or close to the corner 27 of the cup-shaped body 2. As above, the inwardly-tapered section 23 serves to maintain the filter guard 6' in the correct position.

As can be seen from Figure 6, when assembled the filter base 52 is physically supported by the upper surface 10' of the filter guard 6' which ensures that the material of the filter 8 does not extend into a portion of the filtrate volume C which can be considered an outlet zone D of the cartridge 1. The outlet zone D is defined as the enclosed volume between the filter guard 6' and the base 4 of the cup-shaped body 2.

Use of the cartridge 1 is as described above except that beverage extract passing through the filter 8 is channelled to the outlet piercing element 56 via the side apertures 19' and the annular outlet zone D.

In a modification of the above aspect, the outer circumferential wall 11' may also be provided with apertures 19' for passage of beverage flow into the outlet zone D.

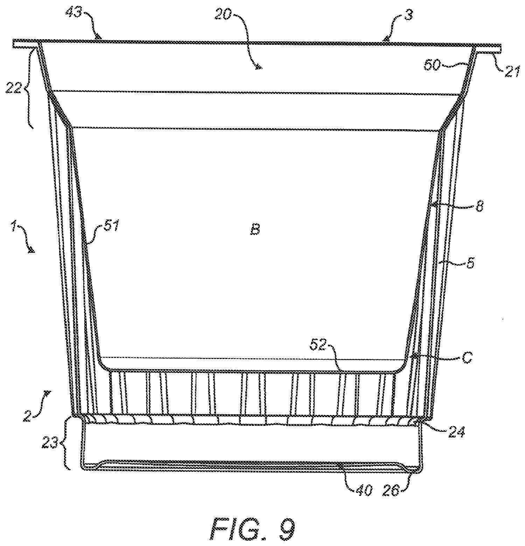

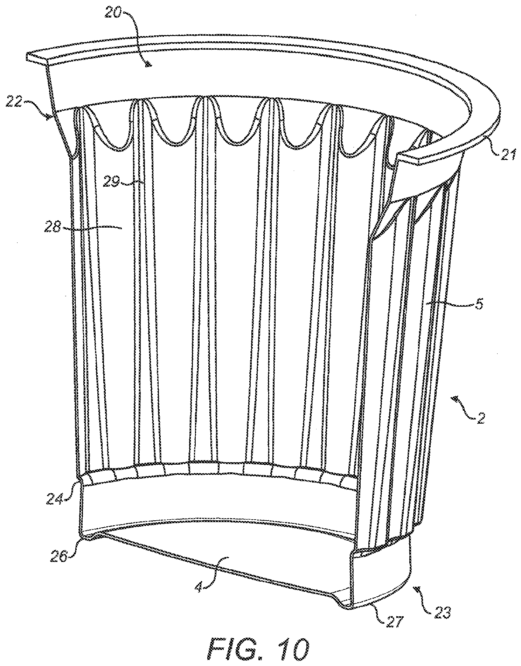

Figures 9 and 10 illustrate a second aspect of cartridge 1 according to the present disclosure. It is similar to the first aspect described above and in the following only the differences will be described. Like reference numerals have been used for like components.

This aspect is substantially the same as the first aspect except that the cartridge 1 does not contain a filter guard 2. Instead the filter 8 is suspended and configured to be kept clear of the outlet piercing element 56 by its axial length.

Use of the cartridge 1 is as described above. However, now the filter 8 is able to expand laterally and longitudinally downwards some way towards the base 4 of the cartridge 1. As with the first aspect this expansion of the side all of the cartridge 1 and expansion of the filter 8 has been found to be advantageous for reducing beverage formation times.

### Examples

Four types of cartridge 1 were prepared. Each type had a fill weight of roast and ground coffee of 9g. Ten samples of each type of cartridge were then brewed using a Cuisinart Model SS-700 beverage preparation machine, available from Cuisinart, Stamford, CT, USA. The annular expansion gap between the wall of the holder and the side wall of the cup- shaped body was approximately 2 mm. The beverage preparation machine was set to dispense a drink of 'Drink size 8' (a nominal 8oz drink size that during experiments delivered a drink weight of approximately 205-210g) and the brew time to dispense each sample was then measured.

The cartridge types were as follows:
Type 1 - A cartridge 1. as described in the second aspect, that is without a filter guard 2.
Type 2 - A cartridge 1 as described in the second aspect, that is without a filter guard 2 but additionally having a collar placed around the peripheral side wall 5 of the cup-shaped body 2 to substantially prevent any lateral expansion of the cup-shaped body 2.
Type 3 - A cartridge 1 as described in the first aspect, that is with a filter guard 2 as shown in Figure 3.

Type 2 - A cartridge 1 as described in the first aspect, that is with a filter guard 2 as shown in Figure 3 but additionally having a collar placed around the peripheral side wall 5 of the cup-shaped body 2 to substantially prevent any lateral expansion of the cup-shaped body 2.

Thus, the Type 2 and Type 4 cartridges acted as controls to highlight the technical effect of the lateral expansion of the cartridges of Types 1 and 3.

The average brew times were as follows:

**Table 1**

| Cartridge Type | Average Brew time for Ten Samples(s) | Drink weight (g) |
|---|---|---|
| 1 | 49 | 210 |
| 2 | 52 | 210 |
| 3 | 51 | 206 |
| 4 | 61 | 208 |

As can be seen, the lateral expansion of the Type 1 cartridge 1 led to a reduced brew time of 49sec compared to 52sec for the control. In the case of the Type 3 cartridge 1 the reduction in brew time was a very significant 10secs, from 61secs to 51 secs.

Without wanting to be bound by theory, it is believed that the lateral expansion of the cup-shaped body 2 (and optionally the filter 8 within) helps to ensure that the channels 29 which act to drain the beverage downwards towards the base 4 of the capsule 1 remain unblocked and hence allow a faster flow. In addition, expansion of the filter 8 allows a larger filter area to be obtained which can also reduce brew times.

Whilst the fastest brew times were obtained where a filter guard 2 was not used, in some circumstances the advantages of using a filter guard will offset the potentially longer brew time. Even in this case, the lateral expansion has been found to be advantageous in reducing brew times by about 6%.

From the foregoing it will be appreciated that cartridges for preparation of beverages and components for such cartridges are provided.

## Claims

1. A cartridge (1), containing one or more beverage ingredients (7), and comprising:
a cup-shaped body (2) having a base (4), a peripheral side wall (5) and an open top (20);
a lid (3) attached to the cup-shaped body (2) to close the open top (20) to define a container volume, the lid (3) being pierceable to accommodate an inflow of an aqueous medium into the container volume;
a filter (8) located within the container volume to divide the container volume into an ingredient chamber volume (B) containing the one or more beverage ingredients (7) and a filtrate volume (C);
the base (4) being pierceable to accommodate an outflow from the filtrate volume (C)of a beverage formed from the aqueous medium and the one or more beverage ingredients (7);
the peripheral side wall(5) comprising a plurality of flutes (28) that define a plurality of filtrate channels (29) configured to direct beverage flow downwards towards the base (4) of the cup-shaped body (2);
wherein the cup-shaped body (2) is configured to be laterally expandable in use when aqueous medium at a temperature of at least 85°C and a pressure of at least 20 KPa is introduced into the container volume;
wherein the cup-shaped body (2) is configured to be laterally expandable by distortion of the flutes (28) of the peripheral side wall(5); and
the peripheral side wall(5) has a generally frustoconical shape prior to use and, after lateral expansion during use, has a generally barrel shape;
**characterised in that** the peripheral side wall(5) has a thickness of 0.15 to 0.35mm and/or the base (4) has a thickness of 0.35 to 0.55mm.

2. A cartridge (1) as claimed in claim 1 wherein the cup-shaped body (2) comprises a polymeric material, or a laminated material, preferably a laminate of polystyrene and polyethylene.

3. A cartridge (1) as claimed in claim 1 wherein the cup-shaped body (2) comprises a barrier layer.

4. A cartridge (1) as claimed in claim 1 wherein the filter (8) is formed from a sheet material that is formed into a cup-shape having a side wall (51) and a base (52), wherein the filter (8) comprises a plurality of sections where the sheet material includes overlying sections when secured to the cup-shaped body (2) and prior to introduction of the aqueous medium.

5. A cartridge (1) as claimed in claim 4 wherein in use the filter (8) is configured to be laterally and/or longitudinally expandable by movement of the sheet material.

6. A cartridge (1) as claimed in claim 1 further comprising a guard element (6) located in the filtrate volume (c);
wherein the guard element (6) is separately-formed from the cup-shaped body (2) and located within the filtrate volume (c) to define an outlet zone (D), the guard element (6) being interposed between the filter (8) and the outlet zone (D);
wherein the guard element (6) is configured to prevent encroachment of the filter (8) into the outlet zone (D) such that in use on full extension of a piercing element (56) of a beverage preparation apparatus the piercing element (56) is enabled to be placed in fluid communication with the outlet zone (D) without the piercing element (56) contacting the guard element (6) or filter (8) .

7. A cartridge (1) as claimed in claim 6 wherein the guard element (6) is configured to provide physical support to at least a portion of the filter (8) in use to limit or preclude axial expansion of the filter (8).

8. A cartridge (1) as claimed in claim 6 wherein the guard element (6) comprises a filter support surface and at least one strut portion for spacing the filter support surface from the piercing surface of the cartridge (1), wherein a distal end of said strut portion is abutted into an angle formed between the side wall (5) and the base (4).

9. A cartridge (1) as claimed in claim 1 wherein the filter (8) comprises an upper rim (50) that is connected at or near a lid-end of the peripheral side wall (5) and/or between the peripheral side wall (5) and the lid (3) and further comprises a filter side wall (51) that is unconnected to the peripheral side wall (5).

10. A system comprising a cartridge (1) as claimed in claim 1 and a beverage preparation machine;
wherein the beverage preparation machine comprises:
a holder (58) for receiving a cartridge (1) containing one or more beverage ingredients (7);
an inlet piercing element (55) for piercing a lid of said cartridge (1) for supplying an aqueous medium to the cartridge (1); and
an outlet piercing element (56) for piercing a base (4) of said cartridge (1) for allowing outflow of a beverage formed from the one or more beverage ingredients (7) and the aqueous medium;
wherein the holder (58) comprises a wall defining a cavity for receiving the cartridge (1), the cavity having an internal diameter that is larger than an external diameter of at least a substantial portion of the peripheral side wall of the cartridge (1) such that on insertion of the cartridge (1) into the cavity an annular expansion gap (59) is provided between at least a substantial portion of the peripheral side wall (5) of the cartridge (1) and the wall of the holder (58).

11. A method of forming a beverage from a cartridge (1) as claimed in claim 1, the method using a beverage preparation machine having an inlet piercing element (55), an outlet piercing element (56) and a holder for the cartridge (1), the method comprising the steps of:
inserting the cartridge (1) into the holder (58), such that the cup-shaped body (2) of the cartridge (1) is received in a cavity bounded by a wall of the holder (58);
piercing the lid (3) of the cartridge (1) with the inlet piercing element (55);
piercing the base of the cartridge (1) with the outlet piercing element (56);
injecting an aqueous medium through the inlet piercing element (55) into the cartridge (1) to form the beverage, the aqueous medium being injected at a temperature of at least 85°C and a pressure of at least 20 KPa; and
dispensing the beverage via the outlet piercing element (56);
wherein due to passage of the aqueous medium through the cartridge (1) the cup-shaped body (2) is laterally expanded so that the peripheral side wall (5) of the cup-shaped body (2) including the flutes (28) has a generally barrel shape after lateral expansion.

## Patentansprüche

1. Kapsel (1), die einen oder mehrere Getränkebestandteile (7) enthält und aufweist:
einen becherförmigen Korpus (2), der einen Boden (4), eine umlaufende Seitenwand (5) und eine offene Oberseite (20) aufweist;
einen Deckel (3), der an dem becherförmigen Korpus (2) angebracht ist, um die offene Oberseite (20) zum Definieren eines Behältervolumens zu verschließen, wobei der Deckel (3) durchstechbar ist, um ein Einströmen eines wässrigen Mediums in das Behältervolumen zu ermöglichen;
einen Filter (8), der innerhalb des Behältervolumens angeordnet ist, um das Behältervolumen in ein Bestandteilekammervolumen (B), das den einen oder die mehreren Getränkebestandteile (7) enthält, und ein Filtratvolumen (C) zu unterteilen;
wobei der Boden (4) durchstechbar ist, um ein Abfließen eines aus dem wässrigen Medium und dem einen oder den mehreren Getränkebestandteilen (7) gebildeten Getränks aus dem Filtratvolumen (C) zu ermöglichen;
wobei die umlaufende Seitenwand (5) mehrere Rillen (28) aufweist, die mehrere Filtratkanäle (29) definieren, die ausgebildet sind, einen Getränkestrom nach unten zum Boden (4) des becherförmigen Korpus (2) zu leiten;
wobei der becherförmige Korpus (2) so ausgebildet ist, dass er sich bei Gebrauch lateral ausdehnen kann, wenn ein wässriges Medium mit einer Temperatur von mindestens 85 °C und einem Druck von mindestens 20 kPa in das Behältervolumen eingebracht wird;
wobei der becherförmige Korpus (2) so ausgebildet ist, dass er sich durch Verformen der Rillen (28) der umlaufenden Seitenwand (5) lateral ausdehnen kann; und
die umlaufende Seitenwand (5) vor dem Gebrauch eine in etwa kegelstumpfförmige Form und nach einer lateralen Expansion bei Gebrauch eine in etwa zylindrische Form aufweist;
**dadurch gekennzeichnet, dass**
die umlaufende Seitenwand (5) eine Dicke von 0,15 bis 0,35 mm und/oder der Boden (4) eine Dicke von 0,35 bis 0,55 mm aufweist.

2. Kapsel (1) nach Anspruch 1, wobei der becherförmige Korpus (2) ein Polymermaterial oder ein laminiertes Material, vorzugsweise ein Laminat aus Polystyrol und Polyethylen, aufweist.

3. Kapsel (1) nach Anspruch 1, wobei der becherförmige Korpus (2) eine Barriereschicht aufweist.

4. Kapsel (1) nach Anspruch 1, wobei der Filter (8) aus einem Folienmaterial gebildet ist, das in eine Becherform umgeformt wurde, die ein Seitenwand (51) und einen Boden (52) aufweist, wobei der Filter (8) mehrere Sektionen besitzt, an denen das Folienmaterial überlappende Abschnitte aufweist, wenn es an dem becherförmigen Korpus (2) befestigt ist und bevor das wässrige Medium eingebracht wird.

5. Kapsel (1) nach Anspruch 4, wobei der Filter (8) dazu ausgebildet ist, sich bei Gebrauch durch eine Bewegung des Folienmaterials lateral und/oder longitudinal aufweiten zu können.

6. Kapsel (1) nach Anspruch 1, die ferner ein Schutzelement (6) aufweist, das sich in dem Filtratvolumen (c) befindet;
wobei das Schutzelement (6) separat von dem becherförmigen Korpus (2) geformt und innerhalb des Filtratvolumens (c) angeordnet ist, um eine Abflusszone (D) zu definieren, wobei das Schutzelement (6) zwischen dem Filter (8) und der Abflusszone (D) angeordnet ist;
wobei das Schutzelement (6) ausgebildet ist, ein Vordringen des Filters (8) in die Abflusszone (D) zu verhindern, sodass in Gebrauch bei vollständig ausgefahrenem Durchstechelement (56) einer Getränkezubereitungsvorrichtung das Durchstechelement (56) in Fluidverbindung mit der Abflusszone (D) gebracht werden kann, ohne dass das Durchstechelement (56) das Schutzelement (6) oder den Filter (8) berührt.

7. Kapsel (1) nach Anspruch 6, wobei das Schutzelement (6) ausgebildet ist, in Gebrauch zumindest einen Teil des Filters (8) physisch abzustützen, um eine axiale Ausdehnung des Filters (8) zu begrenzen oder auszuschließen.

8. Kapsel (1) nach Anspruch 6, wobei das Schutzelement (6) eine Filterstützfläche und zumindest einen Strebenbereich aufweist, um die Filterstützfläche in einem Abstand zur Durchstechfläche der Kapsel (1) zu halten, wobei ein distales Ende des Strebenbereichs an einem zwischen der Seitenwand (5) und dem Boden (4) ausgebildeten Winkel anliegt.

9. Kapsel (1) nach Anspruch 1, wobei der Filter (8) einen oberen Rand (50), der an oder in der Nähe eines deckelseitigen Endes der umlaufenden Seitenwand (5) und/oder zwischen der umlaufenden Seitenwand (5) und dem Deckel (3) verbunden ist, und ferner eine Filterseitenwand (51) aufweist, die nicht mit der umlaufenden Seitenwand (5) verbunden ist.

10. System, das eine Kapsel (1) nach Anspruch 1 und eine Getränkezubereitungsmaschine umfasst;
wobei die Getränkezubereitungsmaschine aufweist:
einen Halter (58) zum Aufnehmen einer Kapsel (1), die einen oder mehrere Getränkebestandteile (7) enthält;
ein Einlassdurchstechelement (55) zum Durchstechen eines Deckels der Kapsel (1) zum Zuführen eines wässrigen Mediums zu der Kapsel (1); und
ein Auslassdurchstechelement (56) zum Durchstechen eines Bodens (4) der Kapsel (1), um ein Abfließen eines aus dem einen oder den mehreren Getränkebestandteilen (7) und dem wässrigen Medium gebildeten Getränks zu ermöglichen;
wobei der Halter (58) eine Wand aufweist, die einen Hohlraum zum Aufnehmen der Kapsel (1) definiert, wobei der Hohlraum einen Innendurchmesser aufweist, der größer ist als ein Außendurchmesser von zumindest einem wesentlichen Teil der umlaufenden Seitenwand der Kapsel (1), sodass beim Einsetzen der Kapsel (1) in den Hohlraum ein ringförmiger Dehnungsabstand (59) zwischen zumindest einem wesentlichen Teil der umlaufenden Seitenwand (5) der Kapsel (1) und der Wand des Halters (58) gebildet wird.

11. Verfahren zum Bilden eines Getränks aus einer Kapsel (1) nach Anspruch 1, wobei bei dem Verfahren eine Getränkezubereitungsmaschine verwendet wird, die ein Einlassdurchstechelement (55), ein Auslassdurchstechelement (56) und einen Halter für die Kapsel (1) aufweist, wobei das Verfahren Schritte umfasst zum:
Einsetzen der Kapsel (1) in den Halter (58), sodass der becherförmige Korpus (2) der Kapsel (1) in einem Hohlraum aufgenommen wird, der von einer Wand des Halters (58) umgrenzt wird;
Durchstechen des Deckels (3) der Kapsel (1) mit dem Einlassdurchstechelement (55);
Durchstechen des Bodens der Kapsel (1) mit dem Auslassdurchstechelement (56);
Einspritzen eines wässrigen Mediums durch das Einlassdurchstechelement (55) in die Kapsel (1), um das Getränk zu bilden, wobei das wässrige Medium mit einer Temperatur von mindestens 85 °C und einem Druck von mindestens 20 kPa eingespritzt wird; und
Abgeben des Getränks über das Auslassdurchstechelement (56);
wobei aufgrund des Durchgangs des wässrigen Mediums durch die Kapsel (1) der becherförmige Korpus (2) lateral so aufgeweitet wird, dass die umlaufende Seitenwand (5) des Rillen (28) aufweisenden becherförmigen Korpus (2) nach der lateralen Aufweitung in etwa eine Zylinderform aufweist.

## Revendications

1. Capsule (1) contenant un ou plusieurs ingrédients de boisson (7) et comprenant :
un corps en forme de tasse (2) ayant une base (4), une paroi latérale périphérique (5) et une partie supérieure ouverte (20),
un couvercle (3) fixé sur le corps en forme de tasse (2) pour fermer la partie supérieure ouverte (20) afin de définir un volume de récipient, le couvercle (3) pouvant être percé afin de loger une entrée d'un milieu aqueux dans le volume de récipient ;
un filtre (8) positionné à l'intérieur du volume de récipient pour diviser le volume de récipient en un volume de chambre d'ingrédient (B) contenant les un ou plusieurs ingrédients de boisson (7) et en un volume de filtrat (C) ;
la base (40) pouvant être percée pour loger une sortie du volume de filtrat (C) d'une boisson formée à partir du milieu aqueux et des un ou plusieurs ingrédients de boisson (7) ;
la paroi latérale périphérique (5) comprenant une pluralité de cannelures (28) qui définissent une pluralité de canaux de filtrat (29) configurés pour diriger l'écoulement de boisson vers le bas vers la base (4) du corps en forme de tasse (2) ;
dans laquelle le corps en forme de tasse (2) est configuré pour pouvoir se dilater latéralement, à l'usage, lorsque le milieu aqueux, à une température d'au moins 85°C et une pression d'au moins 20 KPa, est introduit dans le volume de récipient ;
dans laquelle le corps en forme de tasse (2) est configuré pour pouvoir se dilater latéralement par déformation des cannelures (28) de la paroi latérale périphérique (5) ; et
la paroi latérale périphérique (5) a une forme généralement tronconique avant l'usage, et après la dilatation latérale, pendant l'usage, a généralement une forme de corps cylindrique ;
**caractérisée en ce que** la paroi latérale périphérique (5) a une épaisseur de 0,15 à 0,35 mm et/ou la base (4) a une épaisseur de 0,35 à 0,55 mm.

2. Capsule (1) selon la revendication 1, dans laquelle le corps en forme de tasse (2) comprend un matériau polymère ou un matériau stratifié, de préférence un stratifié de polystyrène et de polyéthylène.

3. Capsule (1) selon la revendication 1, dans laquelle le corps en forme de tasse (2) comprend une couche de barrière.

4. Capsule (1) selon la revendication 1, dans laquelle le filtre (8) est formé à partir d'un matériau en feuille qui est formé selon une forme de tasse ayant une paroi latérale (51) et une base (52), dans laquelle le filtre (8) comprend une pluralité de sections à l'endroit où le matériau en forme de feuille comprend des sections sur-jacentes lorsqu'il est fixé sur le corps en forme de tasse (2) et avant l'introduction du milieu aqueux.

5. Capsule (1) selon la revendication 4, dans laquelle, à l'usage, le filtre (8) est configuré pour pouvoir se dilater latéralement et/ou longitudinalement par le mouvement du matériau en feuille.

6. Capsule (1) selon la revendication 1, comprenant en outre un élément de protection (6) positionné dans le volume de filtrat (c) ;
dans laquelle l'élément de protection (6) est formé séparément du corps en forme de tasse (2) et positionné à l'intérieur du volume de filtrat (c) afin de définir une zone de sortie (D), l'élément de protection (6) étant intercalé entre le filtre (8) et la zone de sortie (D) ;
dans laquelle l'élément de protection (6) est configuré pour empêcher l'empiètement du filtre (8) dans la zone de sortie (D) de sorte que, à l'usage, suite à l'extension totale d'un élément de perçage (56) d'un appareil de préparation de boisson, l'élément de perçage (56) peut être placé en communication de fluide avec la zone de sortie (D) sans que l'élément de perçage (56) ne soit en contact avec l'élément de protection (6) ni le filtre (8).

7. Capsule (1) selon la revendication 6, dans laquelle l'élément de protection (6) est configuré pour fournir le support physique à au moins une partie du filtre (8), à l'usage, pour limiter ou empêcher la dilation axiale du filtre (8).

8. Capsule (1) selon la revendication 6, dans laquelle l'élément de protection (6) comprend une surface de support de filtre et au moins une partie d'entretoise pour espacer la surface de support de filtre de la surface de perçage de la capsule (1), dans laquelle une extrémité distale de ladite partie d'entretoise vient en butée dans un angle formé entre la paroi latérale (5) et la base (4).

9. Capsule (1) selon la revendication 1, dans laquelle le filtre (8) comprend un bord supérieur (50) qui est raccordé au niveau de ou à proximité d'une extrémité de couvercle de la paroi latérale périphérique (5) et/ou entre la paroi latérale périphérique (5) et le couvercle (3) et comprend en outre une paroi latérale de filtre (51) qui n'est pas raccordée à la paroi latérale périphérique (5).

10. Système comprenant une capsule (1) selon la revendication 1 et une machine de préparation de boisson ;
dans lequel la machine de préparation de boisson comprend :
un support (58) pour recevoir une capsule (1) comprenant un ou plusieurs ingrédients de boisson (7) ;
un élément de perçage d'entrée (55) pour percer un couvercle de ladite capsule (1) pour amener un milieu aqueux à la capsule (1) ; et
un élément de perçage de sortie (56) pour percer une base (4) de ladite capsule (1) pour permettre la sortie d'une boisson formée à partir des un ou plusieurs ingrédients de boisson (7) et du milieu aqueux ;
dans lequel le support (58) comprend une paroi définissant une cavité pour recevoir la capsule (1), la cavité ayant un diamètre interne qui est supérieur à un diamètre externe d'au moins une partie sensible de la paroi latérale périphérique de la capsule (1), de sorte que suite à l'insertion de la capsule (1) dans la cavité, un espace de dilation annulaire (59) est prévu entre au moins une partie sensible de la paroi latérale périphérique (5) de la capsule (1) et la paroi du support (58).

11. Procédé pour former une boisson à partir d'une capsule (1) selon la revendication 1, le procédé utilisant une machine de préparation de boisson ayant un élément de perçage d'entrée (55), un élément de perçage de sortie (56) et un support pour la capsule (1), le procédé comprenant les étapes consistant à :
insérer la capsule (1) dans le support (58), de sorte que le corps en forme de tasse (2) de la capsule (1) est reçu dans une cavité délimitée par une paroi du support (58) ;
percer le couvercle (3) de la capsule (1) avec l'élément de perçage d'entrée (55) ;
percer la base de la capsule (1) avec l'élément de perçage de sortie (56) ;
injecter un milieu aqueux par le biais de l'élément de perçage d'entrée (55) dans la capsule (1) pour former la boisson, le milieu aqueux étant injecté à une température d'au moins 85°C et une pression d'au moins 20KPa ; et
distribuer la boisson via l'élément de perçage de sortie (56) ;
dans lequel, en raison du passage du milieu aqueux à travers la capsule (1), le corps en forme de tasse (2) est latéralement dilaté de sorte que la paroi latérale périphérique (5) du corps en forme de tasse (2) comprenant les cannelures (28) a généralement une forme de corps cylindrique après la dilation latérale.
